# EUROPEAN PATENT APPLICATION

(11) **EP 4 710 751 A1**
(43) Date of publication of application: **18.03.2026**
(21) Application number: 24844383.0
(22) Date of filing: 30.05.2024
(51) Int. Cl.: A01G 3/08

(54) **PRUNING MACHINE**

(30) Priority: 26.07.2023 CN 202310927779; 22.04.2024 CN 202410491333
(71) Applicant: Nanjing Chervon Industry Co., Ltd., Nanjing, Jiangsu 211106 (CN)
(72) Inventor: XU, Chao, Nanjing, Jiangsu 211106 (CN); ZHAO, Xiaozhe, Nanjing, Jiangsu 211106 (CN); XU, Yifan, Nanjing, Jiangsu 211106 (CN)
(74) Representative: Sun, Yiming
(86) International application number: PCT/CN2024/096381
(87) International publication number: WO 2025/020688

(57) **Abstract**

Provided is a pruner. The pruner includes: a body connected to an energy device; and a motor configured to drive a working assembly to move. The body includes: a first grip for a user to hold; and an accommodation portion for accommodating at least part of the motor. The motor has the center of gravity of the motor. The working assembly includes a first working member and a second working member, and the plane that is located at the center of the first working member and the second working member and is substantially parallel to the extension direction of the first working member and the extension direction of the second working member is defined as a center plane. The distance between the center plane and the center of gravity of the motor in an up and down direction is greater than or equal to 0 mm and less than or equal to 40 mm. This pruner is comfortable and safe to use.

## Description

This application claims priority to Chinese Patent Application No. 202310927779.0 filed with the China National Intellectual Property Administration (CNIPA) on Jul. 26, 2023 and Chinese Patent Application No. 202410491333.2 filed with the CNIPA on Apr. 22, 2024, the disclosures of which are incorporated herein by reference in their entireties.

### TECHNICAL FIELD

The present application relates to the field of garden tools and, in particular, to a pruner.

### BACKGROUND

A pruner in the related art is typically used for trimming branches and leaves. An existing pruner for trimming branches of bushes or other plants has a relatively large dimension and a relatively heavy weight so that branches or leaves can be effectively trimmed. In some working conditions, a user needs to rotate the pruner to change a cutting direction of the pruner so that the user can shape the branches and the leaves or the bushes. For such a handheld garden tool with a relatively heavy weight, the dimension of the tool, the weight distribution of the tool, and a handle configuration become key factors for the user to obtain comfortable and safe operation experience. Currently, pruners on the market generally have unreasonable tool dimensions, weight distributions, or handle configurations. Therefore, when the user rotates the pruner, the moment of inertia is relatively large, and the pruner is uncomfortable and unsafe to operate. This part provides background information related to the present application, and the background information is not necessarily the existing art.

### SUMMARY

An object of the present application is to solve or at least alleviate part or all of the preceding problems. Therefore, an object of the present application is to provide a pruner that is comfortable and safe to use.

To achieve the preceding object, the present application adopts the technical solutions below.

A pruner includes: a body connected to an energy device; and a motor configured to drive a working assembly to move. The body includes: a first grip for a user to hold; and an accommodation portion for accommodating at least part of the motor. The motor has the center of gravity of the motor. The working assembly includes a first working member and a second working member, and the plane that is located at the center of the first working member and the second working member and is substantially parallel to the extension direction of the first working member and the extension direction of the second working member is defined as a center plane. The distance between the center plane and the center of gravity of the motor in an up and down direction is greater than or equal to 0 mm and less than or equal to 40 mm.

In some examples, the pruner further includes a second grip for the user to hold.

In some examples, the second grip is located behind the first grip, and the accommodation portion is located between the first grip and the second grip.

In some examples, the distance between the center line of the first grip in the up and down direction and the center of gravity of the motor in the up and down direction is greater than or equal to 0 mm and less than or equal to 40 mm.

In some examples, the distance between the center line of the second grip in the up and down direction and the center of gravity of the motor in the up and down direction is greater than or equal to 0 mm and less than or equal to 40 mm.

In some examples, the pruner includes a transmission assembly connecting the motor to the working assembly, where the distance between the center of gravity of the transmission assembly and the center of gravity of the motor in the up and down direction is greater than or equal to 0 mm and less than or equal to 40 mm.

In some examples, the accommodation portion includes a transmission assembly accommodation portion accommodating the transmission assembly and a motor accommodation portion accommodating the motor, and the transmission assembly accommodation portion is located in front of the motor accommodation portion.

In some examples, the energy device includes a battery pack, and the distance between the center of gravity of the battery pack and the center of gravity of the motor in the up and down direction is greater than or equal to 0 mm and less than or equal to 40 mm.

In some examples, the weight of the pruner is greater than or equal to 2 kg and less than or equal to 3 kg.

In some examples, the energy device includes a battery pack, and the weight of the battery pack is greater than or equal to 420 g and less than or equal to 514 g.

In some examples, the pruner includes a control device, where the control device is accommodated in the accommodation portion, and the weight of the control device is less than or equal to 125 g.

In some examples, the pruner includes a transmission assembly connecting the motor to the working assembly, where the overall weight of the working assembly, the transmission assembly, and the motor is greater than or equal to 1.2 kg and less than or equal to 1.5 kg.

In some examples, the body is provided with a switch for controlling movement of the motor, the energy device includes a battery pack, the pruner includes a transmission assembly connecting the motor to the working assembly, and projections of the working assembly, the transmission assembly, the motor, the switch, and the battery pack in a front and rear direction at least partially overlap.

In some examples, the pruner includes a switch for controlling movement of the motor, where at least part of the switch is disposed on the first grip.

In some examples, the center of gravity of the pruner is located on the first grip. A pruner includes: a body connected to an energy device; and a motor configured to drive a working assembly to move. The body includes: a first grip for a user to hold; and an accommodation portion for accommodating at least part of the motor. The maximum dimension of the first grip and the accommodation portion in an up and down direction is less than or equal to 83 mm.

In some examples, the pruner further includes a second grip for the user to hold, and the maximum dimension of the first grip, the second grip, and the accommodation portion in the up and down direction is less than or equal to 83 mm.

In some examples, the maximum dimension of the first grip and the second grip in the up and down direction is greater than or equal to 38 mm and less than or equal to 50 mm.

In some examples, the energy device includes a battery pack, and the body includes a mounting portion configured to be mounted with the battery pack. After the battery pack is mounted to the mounting portion, the overall dimension of the mounting portion and the battery pack in the up and down direction is greater than or equal to 61 mm and less than or equal to 85 mm.

In some examples, the energy device includes the battery pack, and the dimension of the battery pack in the up and down direction is greater than or equal to 45 mm and less than or equal to 75 mm.

In some examples, the pruner includes a shield disposed on the body, and the dimension of the pruner in the up and down direction is greater than or equal to 75 mm and less than or equal to 105 mm.

In some examples, the dimension of the pruner in a front and rear direction is greater than or equal to 800 mm and less than or equal to 1500 mm.

In some examples, the dimension of the working assembly in the front and rear direction is greater than or equal to 390 mm and less than or equal to 610 mm.

In some examples, the dimension of the body in the front and rear direction is greater than or equal to 648 mm and less than or equal to 792 mm.

In some examples, when the pruner is placed on a plane, the distance from the uppermost end of the first grip to the plane is less than or equal to 67 mm.

In some examples, when the pruner is placed on a plane, the distance from the uppermost end of the body to the plane is less than or equal to 86 mm.

A pruner includes: a body connected to an energy device; and a motor configured to drive a working assembly to move. The body includes: a first grip for a user to hold; and an accommodation portion for accommodating at least part of the motor. The body is provided with a switch for controlling movement of the motor. The switch has a released state for stopping the movement of the motor. The working assembly includes a first working member and a second working member, and the plane that is located at the center of the first working member and the second working member and is substantially parallel to the extension direction of the first working member and the extension direction of the second working member is defined as a center plane. In the released state, the switch is at least partially disposed below the center plane.

In some examples, the switch includes a pressing surface, and the pressing surface is disposed below the center plane.

In some examples, the distance from the lowermost end of the switch to the center plane is greater than or equal to 18 mm and less than or equal to 22 mm.

In some examples, the energy device includes a battery pack, and the distance from the lowermost end of the battery pack to the center plane is greater than or equal to 14 mm and less than or equal to 50 mm.

In some examples, the body includes the first grip and a second grip for the user to hold and the accommodation portion accommodating at least part of the motor, and the accommodation portion is located between the first grip and the second grip.

In some examples, the energy device includes the battery pack, and the lowermost end of the accommodation portion is flush with the lowermost end of the battery pack in the up and down direction.

In some examples, the body includes the first grip and the second grip for the user to hold, the second grip is located behind the first grip, and at least part of the switch is disposed on the second grip.

In some examples, the switch is configured to rotate about the axis of the switch, and the axis of the switch is disposed above the center plane.

The present application has the benefits below. The dimensions, weight distribution, and handle configuration of the pruner are reasonable, and the pruner is comfortable and safe to use.

### BRIEF DESCRIPTION OF DRAWINGS

FIG. 1 is a plan view of a pruner according to an example of the present application.
FIG. 2 is a plan view of the pruner in FIG. 1 with part of a housing removed.
FIG. 3 is a plan view of the pruner in FIG. 1 with a housing removed.
FIG. 4 is a front view of the pruner in FIG. 1.
FIG. 5 is a front view of the pruner in FIG. 1 with part of a housing removed.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

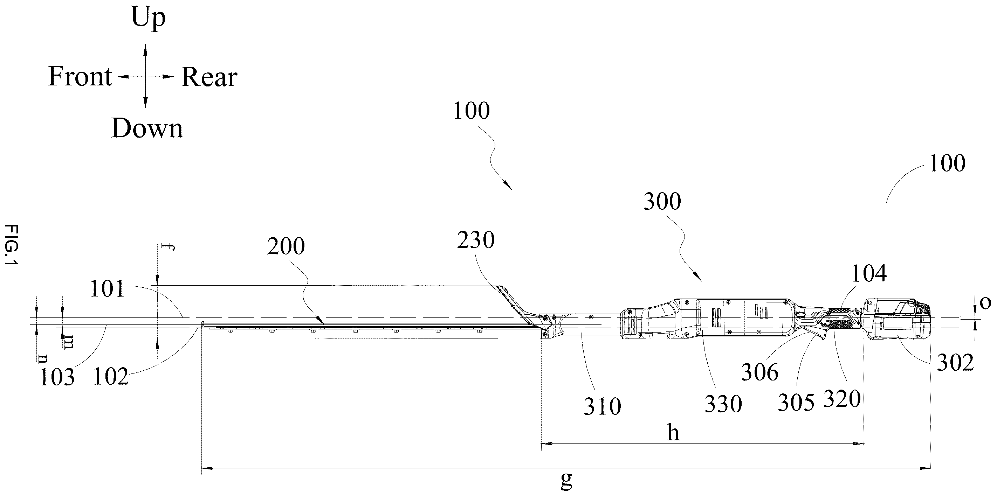

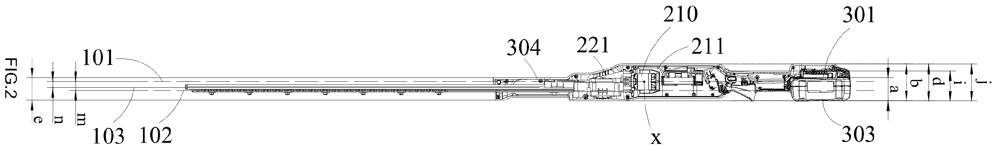

As shown in FIGS. 1 and 2, this example provides a pruner 100. The pruner 100 can trim branches and leaves of bushes or other plants through a reciprocating working assembly 200 neatly. The pruner 100 includes a body 300 and a motor 210. The motor 210 is configured to drive the working assembly 200 to move. At least part of the working assembly 200 is disposed outside and protrudes from the body 300. A mounting portion 301 is disposed at an end of the body 300. The mounting portion 301 is used for connecting an energy device 302, such as a direct current power supply or an alternating current power supply. In this example, the energy device 302 includes a battery pack 303, and the mounting portion 301 is connected to the battery pack 303. The dimension a of the single battery pack 303 in an up and down direction is greater than or equal to 45 mm and less than or equal to 75 mm. After the battery pack 303 is mounted to the mounting portion 301, the overall dimension b of the mounting portion 301 and the battery pack 303 in the up and down direction is greater than or equal to 61 mm and less than or equal to 85 mm. The battery pack 303 is mounted to the mounting portion 301 substantially parallel to the extension direction of the pruner 100. Thus, the battery pack 303 occupies a small space in the up and down direction. In some examples, the direction in which the battery pack 303 is mounted to the mounting portion 301 may be horizontal, oblique, vertical, or the like, which is not limited here.

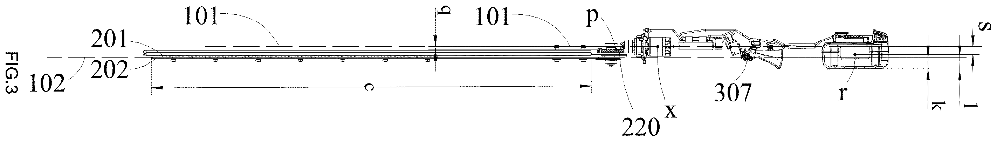

As shown in FIGS. 1 to 3, the body 300 includes a first grip 310. The first grip 310 is held by a user. In this example, the length of the portion of the working assembly 200 with blades in a front and rear direction is greater than or equal to 200 mm, and the body 300 includes the first grip 310 and a second grip 320. The body 300 has two portions for the user to hold. The user may selectively hold the first grip 310 and the second grip 320 with two hands, respectively or hold the first grip 310 or the second grip 320 with two hands together. In some examples, the length of the portion of the working assembly 200 with the blades in the front and rear direction is less than 200 mm, and the body 300 includes the first grip 310 or the second grip 320. The body 300 has one portion for the user to hold, and the user may hold the first grip 310 or the second grip 320 together with two hands or hold the first grip 310 or the second grip 320 with one hand.

The body 300 further includes an accommodation portion 330, and the accommodation portion 330 accommodates at least part of the motor 210. The pruner 100 further includes a transmission assembly 220 connecting the motor 210 to the working assembly 200. In this example, the transmission assembly 220 includes a bevel gear. In some examples, the transmission assembly 220 further includes common transmission parts such as a planet gear or a spur gear. The accommodation portion 330 includes a motor accommodation portion 211 and a transmission assembly accommodation portion 221. The motor 210 is accommodated in the motor accommodation portion 211, and the transmission assembly 220 is accommodated in the transmission assembly accommodation portion 221. The transmission assembly accommodation portion 221 is located in front of the motor accommodation portion 211. In this example, the shape and dimension of the motor accommodation portion 211 are different from the shape and dimension of the transmission assembly accommodation portion 221. The dimension of the transmission assembly accommodation portion 221 in the up and down direction is slightly smaller than the dimension of the motor accommodation portion 211 in the up and down direction. Thus, the transmission assembly 220 with a relatively small dimension is accommodated in the transmission assembly accommodation portion 221 with a relatively small dimension so that the accommodation portion 330 has a compact structure and a high space utilization rate and the pruner 100 is light. In some examples, the shape and dimension of the motor accommodation portion 211 are the same as the shape and dimension of the transmission assembly accommodation portion 221, or the dimension of the motor accommodation portion 211 is smaller than the dimension of the transmission assembly accommodation portion 221. The accommodation portion 330 is located between the first grip 310 and the second grip 320. Thus, when the user holds the first grip 310 and the second grip 320 with the two hands, respectively, a space can be naturally reserved between the two hands, which is ergonomic.

The maximum dimension d of the first grip 310, the second grip 320, and the accommodation portion 330 in the up and down direction is less than or equal to 83 mm. Thus, the body 300 has a compact dimension in the up and down direction, and the moment of inertia is small when the user rotates the pruner 100 about an axis extending along the front and rear direction. The maximum dimension e of the first grip 310 and the second grip 320 in the up and down direction is greater than or equal to 38 mm and less than or equal to 50 mm. Thus, it is comfortable for the user to hold the first grip 310 and the second grip 320, and the moment of inertia of the portion of the body 300 for the user to hold is small. In some examples, the maximum dimension d of the first grip 310, the second grip 320, and the accommodation portion 330 in the up and down direction is less than or equal to 76 mm. In some examples, the maximum dimension d of the first grip 310 and the accommodation portion 330 in the up and down direction is less than or equal to 68 mm.

The pruner 100 includes a shield 230 disposed on the body 300. The shield 230 is mounted at the joint between the body 300 and the working assembly 200 and has a dimension larger than the dimension of the body 300 in the up and down direction. Thus, the user's hands can be protected from being cut by the working assembly 200. The dimension f of the pruner 100 in the up and down direction is greater than or equal to 75 mm and less than or equal to 105 mm. The maximum dimension of the pruner 100 in the up and down direction appears at the position where the shield 230 is mounted to the body 300. The shield 230 has a relatively light weight and a relatively small volume and does not significantly affect the moment of inertia of the pruner 100.

In this example, the dimension g of the pruner 100 in the front and rear direction is greater than or equal to 800 mm and less than or equal to 1500 mm. The dimension c of the working assembly 200 in the front and rear direction is greater than or equal to 390 mm and less than or equal to 610 mm. The dimension h of the body 300 in the front and rear direction is greater than or equal to 648 mm and less than or equal to 792 mm. In some examples, the dimension g of the pruner 100 in the front and rear direction is greater than or equal to 1050 mm and less than or equal to 1450 mm. The dimension c of the working assembly 200 in the front and rear direction is greater than or equal to 440mm and less than or equal to 560 mm. The dimension h of the body 300 in the front and rear direction is greater than or equal to 698 mm and less than or equal to 742 mm. Part of the working assembly 200 is disposed in the body 300. Therefore, the working assembly 200 and the body 300 overlap to a certain degree in the front and rear direction, but the length of the pruner 100 is substantially equal to the sum of the length of the working assembly 200 and the length of the body 300.

When the pruner 100 is placed on a plane, the distance i from the uppermost end of the first grip 310 to the plane is less than or equal to 67 mm. The distance j from the uppermost end of the body 300 to the plane is less than or equal to 86 mm. Thus, the pruner 100 has a compact structure during packaging and transportation, thereby saving space.

The body 300 includes a housing 304, and an accommodation space is formed inside the housing 304. In this example, the housing 304 is an integrally formed component. The first grip 310, the second grip 320, and the accommodation portion 330 communicate with each other. In some examples, the housing 304 may be formed separately, and the first grip 310, the second grip 320, and the accommodation portion 330 do not all communicate with each other.

The body 300 is provided with a switch 305 for controlling the movement of the motor 210. The body 300 includes the switch 305. The user controls the start and stop of the pruner 100 through the switch 305. The switch 305 has a released state for stopping the movement of the motor 210 and a pressed state for starting the movement of the motor 210. When the user safely presses the switch 305, the motor 210 rotates to drive the working assembly 200 to move. When the user releases the switch 305, the motor 210 stops rotating, thereby causing the working assembly 200 to stop moving. In this example, the motor 210 may be a brushless motor or a brushed motor with an outer rotor or an inner rotor.

The working assembly 200 includes a first working member 201 and a second working member 202. The first working member 201 and the second working member 202 are two toothed blades extending substantially in parallel. The plane that is located at the center of the first working member 201 and the second working member 202 and is substantially parallel to the extension direction of the first working member 201 and the extension direction of the second working member 202 is defined as a center plane 102. In the released state, the switch 305 is at least partially disposed below the center plane 102. The switch 305 includes a pressing surface 306. The pressing surface 306 is an oblique surface, which is convenient for the user to place a finger on the pressing surface and press the switch 305 effortlessly. The pressing surface 306 is disposed below the center plane 102. The pressing surface 306 is disposed below the center plane 102 such that the finger of the user for operating the switch 305 is located below the center plane 102 when the user presses the switch 305 to operate the pruner 100. In this example, the second grip 320 is disposed behind the first grip 310, and at least part of the switch 305 is disposed on the second grip 320. One switch 305 is provided, and the switch 305 is a trigger. The switch 305 is configured to rotate about an axis 307 of the switch, and the axis 307 of the switch 305 is disposed above the center plane 102. The switch 305 crosses the center plane 102 in the up and down direction. Thus, when the user holds the pruner 100, the hand crosses the center plane 102 in the up and down direction, that is, the position of the hand in the up and down direction is substantially the same as the position of each of the blades in the up and down direction. The switch 305 has a lowermost end, and the distance k from the lowermost end of the switch 305 to the center plane 102 is greater than or equal to 14 mm and less than or equal to 50 mm. In some examples, at least part of the switch 305 is disposed on the first grip 310. Multiple switches 305 may be provided. The switch 305 may be a mechanical switch, an electromagnetic switch, a membrane switch, or the like, which is not limited here.

The battery pack 303 has a lowermost end. After the battery pack 303 is mounted to the mounting portion 301, the distance I from the lowermost end of the battery pack 303 to the center plane 102 is greater than or equal to 14 mm and less than or equal to 50 mm. The accommodation portion 330 has a lowermost end. The lowermost end of the accommodation portion 330 is flush with the lowermost end of the battery pack 303 in the up and down direction. Thus, the pruner 100 can be steadily placed on a plane by means of the support of the accommodation portion 330 and the battery pack 303. Moreover, when the pruner 100 is placed on the plane, since the lowermost end of the first grip 310 and the lowermost end of the second grip 320 are higher than the lowermost end of the accommodation portion 330, the user can conveniently pick up the pruner 100 by passing the hand between the plane and the first grip 310 and the second grip 320. In some examples, the lowermost end of the accommodation portion 330 and the lowermost end of the mounting portion 301 are flush with each other in the up and down direction. Thus, when the battery pack 303 is not mounted, the pruner 100 may be steadily placed on a plane.

The motor 210 has the center of gravity x of the motor, and the distance m between the center plane 102 and the center of gravity x of the motor in the up and down direction is greater than or equal to 0 mm and less than or equal to 40 mm. The distance between the center of gravity of the motor 210 and the center of gravity of the working assembly 200 in the up and down direction is relatively small. In this example, the motor 210 has a rotation axis, and the rotation axis is the center line of the motor 210. The motor 210 is disposed horizontally, and the rotation axis of the motor 210 extends substantially along the extension direction of the working assembly 200. The motor accommodation 211 has a first center line 101, and the center of gravity x of the motor is located on the first center line 101. The distance between the rotation axis of the motor 210 and the center plane 102 of the blades is relatively small. In some examples, the motor 210 may be disposed vertically, and the rotation axis of the motor 210 extends substantially perpendicular to the extension direction of the working assembly 200.

The distance n between the center line 103 of the first grip 310 in the up and down direction and the center of gravity x of the motor in the up and down direction is greater than or equal to 0 mm and less than or equal to 40 mm. The distance between the center line of the first grip 310 and the center line of the motor 210 in the up and down direction is relatively small.

The distance o between the center line 104 of the second grip 320 in the up and down direction and the center of gravity x of the motor in the up and down direction is greater than or equal to 0 mm and less than or equal to 40 mm. The distance between the center line of the second grip 320 and the center line of the motor 210 in the up and down direction is relatively small. In this example, the center line 104 of the second grip 320 in the up and down direction intersects with the center of gravity x of the motor, and the distance o between the center line 104 of the second grip 320 in the up and down direction and the center of gravity x of the motor in the up and down direction is 0 mm.

The distance q between the center of gravity p of the transmission assembly 220 and the center of gravity x of the motor in the up and down direction is greater than or equal to 0 mm and less than or equal to 40 mm. The distance between the center of gravity p of the transmission assembly 220 and the center of gravity x of the motor in the up and down direction is relatively small.

The distance s between the center of gravity r of the battery pack 303 and the center of gravity x of the motor in the up and down direction is greater than or equal to 0 mm and less than or equal to 40 mm. The distance between the center of gravity of the battery pack 303 and the center of gravity x of the motor in the up and down direction is relatively small. The distance between the center lines of the motor 210, the transmission assembly 220, the first grip 310, the second grip 320, the battery pack 303, and the motor accommodation portion 211 in the up and down direction is relatively small. Regardless of the specific axis about which the user rotates the pruner 100, the moment of inertia is small when the user rotates the pruner 100 about an axis extending along the front and rear direction, and the pruner 100 is comfortable and safe to use.

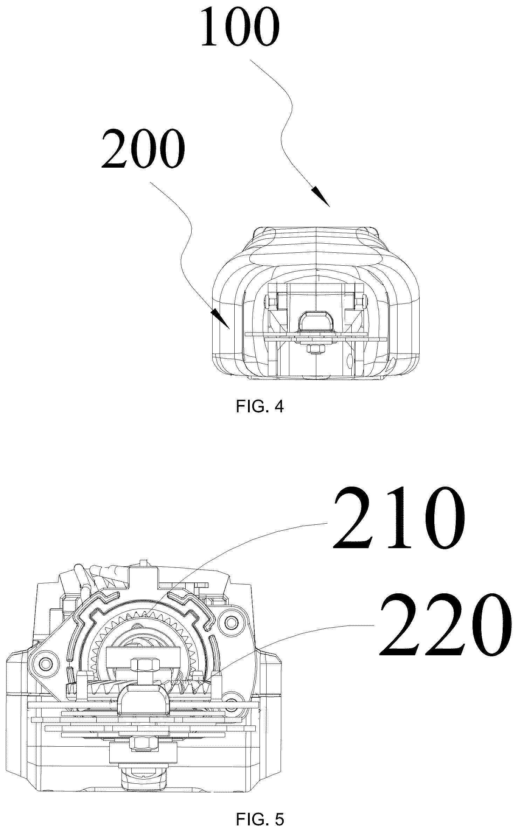

The weight of the pruner 100 is greater than or equal to 2 kg and less than or equal to 3 kg. The weight of the battery pack 303 is greater than or equal to 420 g and less than or equal to 514 g. The pruner 100 includes a control device, and the control device is accommodated in the accommodation portion 330. The weight of the control device is less than or equal to 125 g. The control device includes a printed circuit board (PCB). The overall weight of the working assembly 200, the transmission assembly 220, and the motor 210 is greater than or equal to 1.2 kg and less than or equal to 1.5 kg. The weight of the working assembly 200 is greater than or equal to 850 g and less than or equal to 1050 g. The weight of the motor 210 is greater than or equal to 120 g and less than or equal to 155 g. The weight of the transmission assembly 220 is greater than or equal to 240 g and less than or equal to 300 g. As shown in FIGS. 1 to 5, projections of the working assembly 200, the transmission assembly 220, the motor 210, the switch 305, and the battery pack 303 in the front and rear direction at least partially overlap. When the user rotates the pruner 100 about an axis extending along the front and rear direction, the weights of the parts are uniformly and tightly distributed around the rotation axis, the moment of inertia is small, the position of the center of gravity of the pruner 100 changes little in the up and down direction, and the user will not sprain the wrist due to a sudden change of the center of gravity of the pruner 100. The dimensions, weight distribution, and handle configuration of the pruner 100 are reasonable, and the pruner 100 is comfortable and safe to use. In some examples, the center of gravity of the pruner 100 is located on the first grip 310. Thus, when the user holds the first grip 310, the weight of the portion of the pruner 100 in front of the user's hand and the weight of the portion of the pruner 100 behind the user's hand are substantially balanced, and the pruner 100 is comfortable to use during rotation and normal use.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A pruner , comprising:
a body connected to an energy device; and
a motor configured to drive a working assembly to move;
wherein the body comprises:
a first grip for a user to hold; and
an accommodation portion for accommodating at least part of the motor;
the motor has a center of gravity of the motor;
the working assembly comprises a first working member and a second working member, and a plane that is located at a center of the first working member and the second working member and is substantially parallel to an extension direction of the first working member and an extension direction of the second working member is defined as a center plane; and
a distance between the center plane and the center of gravity of the motor in an up and down direction is greater than or equal to 0 mm and less than or equal to 40 mm.

2. The pruner according to claim 1, further comprising a second grip for the user to hold.

3. The pruner according to claim 2, wherein the second grip is located behind the first grip, and the accommodation portion is located between the first grip and the second grip.

4. The pruner according to claim 1, wherein a distance between a center line of the first grip in the up and down direction and the center of gravity of the motor in the up and down direction is greater than or equal to 0 mm and less than or equal to 40 mm.

5. The pruner according to claim 2, wherein a distance between a center line of the second grip in the up and down direction and the center of gravity of the motor in the up and down direction is greater than or equal to 0 mm and less than or equal to 40 mm.

6. The pruner according to claim 1, comprising a transmission assembly connecting the motor to the working assembly, wherein a distance between a center of gravity of the transmission assembly and the center of gravity of the motor in the up and down direction is greater than or equal to 0 mm and less than or equal to 40 mm.

7. The pruner according to claim 6, wherein the accommodation portion comprises a transmission assembly accommodation portion accommodating the transmission assembly and a motor accommodation portion accommodating the motor, and the transmission assembly accommodation portion is located in front of the motor accommodation portion.

8. The pruner according to claim 1, wherein the energy device comprises a battery pack, and a distance between a center of gravity of the battery pack and the center of gravity of the motor in the up and down direction is greater than or equal to 0 mm and less than or equal to 40 mm.

9. The pruner according to claim 1, wherein a weight of the pruner is greater than or equal to 2 kg and less than or equal to 3 kg.

10. The pruner according to claim 1, wherein the energy device comprises a battery pack, and a weight of the battery pack is greater than or equal to 420 g and less than or equal to 514 g.

11. The pruner according to claim 1, comprising a control device, wherein the control device is accommodated in the accommodation portion, and a weight of the control device is less than or equal to 125 g.

12. The pruner according to claim 1, comprising a transmission assembly connecting the motor to the working assembly, wherein an overall weight of the working assembly, the transmission assembly, and the motor is greater than or equal to 1.2 kg and less than or equal to 1.5 kg.

13. The pruner according to claim 1, wherein the body is provided with a switch for controlling movement of the motor, the energy device comprises a battery pack, the pruner comprises a transmission assembly connecting the motor to the working assembly, and projections of the working assembly, the transmission assembly, the motor, the switch, and the battery pack in a front and rear direction at least partially overlap.

14. The pruner according to claim 3, comprising a switch for controlling movement of the motor, wherein at least part of the switch is disposed on the first grip.

15. The pruner according to claim 3, wherein a center of gravity of the pruner is located on the first grip.

16. A pruner, comprising:
a body connected to an energy device; and
a motor configured to drive a working assembly to move;
wherein the body comprises:
a first grip for a user to hold; and
an accommodation portion for accommodating at least part of the motor;
wherein a maximum dimension of the first grip and the accommodation portion in an up and down direction is less than or equal to 83 mm.

17. The pruner according to claim 16, comprising a second grip for the user to hold, and a maximum dimension of the first grip, the second grip, and the accommodation portion in the up and down direction is less than or equal to 83 mm.

18. The pruner according to claim 17, wherein the maximum dimension of the first grip and the second grip in the up and down direction is greater than or equal to 38 mm and less than or equal to 50 mm.

19. The pruner according to claim 16, wherein the energy device comprises a battery pack, the body comprises a mounting portion configured to be mounted with the battery pack; when the battery pack is mounted to the mounting portion, the overall dimension of the mounting portion and the battery pack in the up and down direction is greater than or equal to 61 mm and less than or equal to 85 mm.

20. A pruner, comprising:
a body connected to an energy device; and
a motor configured to drive a working assembly to move;
wherein the body comprises:
a first grip for a user to hold; and
an accommodation portion for accommodating at least part of the motor;
wherein the body is provided with a switch for controlling movement of the motor;
the switch has a released state for stopping the movement of the motor;
the working assembly includes a first working member and a second working member, and the plane that is located at a center of the first working member and the second working member and is substantially parallel to an extension direction of the first working member and an extension direction of the second working member is defined as a center plane, and in the released state, the switch is at least partially disposed below the center plane.
